# EUROPEAN PATENT SPECIFICATION

(11) **EP 3 156 335 B1**
(45) Date of publication and mention of the grant of the patent: **22.02.2023**
(21) Application number: 15807405.4
(22) Date of filing: 10.06.2015
(51) Int. Cl.: B64G 1/32, B64G 1/26, B64G 1/64, B64G 1/66

(54) **AN ORBIT DESCENT SYSTEM FOR SPACE DEBRIS**
EIN SYSTEM FÜR DEN UMLAUFBAHNABSTIEG VON WELTRAUMMÜLL
UN SYSTÈME DE DESCENTE EN ORBITE POUR LES DÉBRIS SPATIAUX

(30) Priority: 13.06.2014 JP 2014122602
(43) Date of publication of application: 19.04.2017
(73) Proprietor: Japan Aerospace Exploration Agency, Chofu-shi, Tokyo 182-8522 (JP)
(72) Inventor: KAWAMOTO Satomi, Chofu-shi Tokyo 182-8522 (JP); OHKAWA Yasushi, Chofu-shi Tokyo 182-8522 (JP); IKI Kentaro, Chofu-shi Tokyo 182-8522 (JP)
(74) Representative: Fink Numrich Patentanwälte PartmbB
(86) International application number: PCT/JP2015/066753
(87) International publication number: WO 2015/190527

(56) References cited:
- WO-A1-2013/065795
- JP-A- 2004 098 959
- JP-A- 2010 285 137
- JP-A- 2012 236 591
- US-A- 6 116 544
- US-A1- 2012 292 449

## Description

### TECHNICAL FIELD

The present invention relates to a form of artificial satellite and an operation method therefor, which enable removing large-sized space debris such as upper stages of rockets. In particular, this invention relates to an orbit descent system for space debris, using an artificial satellite for space debris removal, which are implementable at low cost with use of an electrodynamic tether.

### BACKGROUND ART

An increase in space debris has recently become a problem, and it is now predicted that collisions of pieces of space debris which are already in orbit lead to an increasing number of pieces, and thus, various approaches for space debris removal are being studied on a worldwide basis. There is an international consensus that space debris to be removed, in particular, is large-sized space debris in a congested orbit. The large-sized space debris is typically space debris in a class on the order of several meters to 10 meters in length and in a class on the order of several tons in weight, such as large-sized satellites or upper stages of rockets. Note that, as employed herein, the term "space debris" refers to an object orbiting around a heavenly body without performing some significant activity, and the term "artificial satellite" refers to an object orbiting around a heavenly body for some purpose.

As an example of a method for removing large-sized space debris, European and American space agencies or the like has examined the approach of capturing space debris by a robot arm and causing a descent of an orbit of the space debris by a conventional type of propulsion system. However, this approach has difficulty in capturing the space debris and controlling the robot arm and also requires several hundreds of kilograms of fuel, which in turn leads to use of an artificial satellite in a class on the order of several tons and also to an increase in launch cost. Such a method is considered to be difficult to realize not only from a technological point of view but also in terms of cost, and hence the method does not yet achieve debris removal even on a worldwide basis.

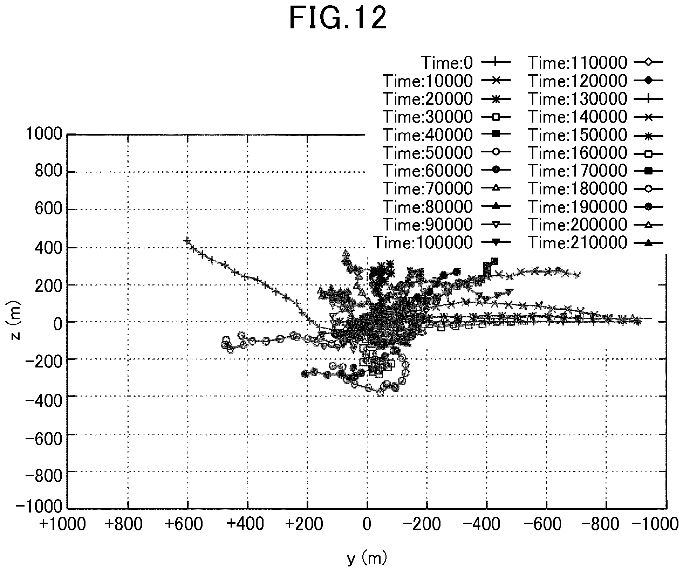

Moreover, since using the robot arm to fix space debris and force the space debris to move while managing its center of gravity is complicated in its control, a proposal to use an artificial satellite for space debris removal to tow space debris by a tether, instead, has also been examined. However, the tether remains stable in a vertical direction due to a gravitational gradient force (i.e. a balance between gravity and a centrifugal force) but is unstable in a direction of travel, and hence, as illustrated in Fig. 12, the tether, after addition of thrust thereto, may be loosened or rotated and thus collide against the artificial satellite for space debris removal and, in turn, cause damage to the artificial satellite. Therefore, the above-described method of towing the space debris by the tether requires control for avoiding such damage.

Also, in the conventional type of propulsion system, the weight of fuel required to change an orbit of space debris is several hundreds of kilograms, which alone leads to an increase in the size of the artificial satellite for space debris removal and hence to an increase in the launch cost, and moreover, in the event of failure, the artificial satellite for space debris removal, in itself, results in dangerous space debris loaded with large quantities of fuel. In order to avoid such a problem, a proposal to use an electrodynamic tether as a high-efficiency propulsion system has been considered.

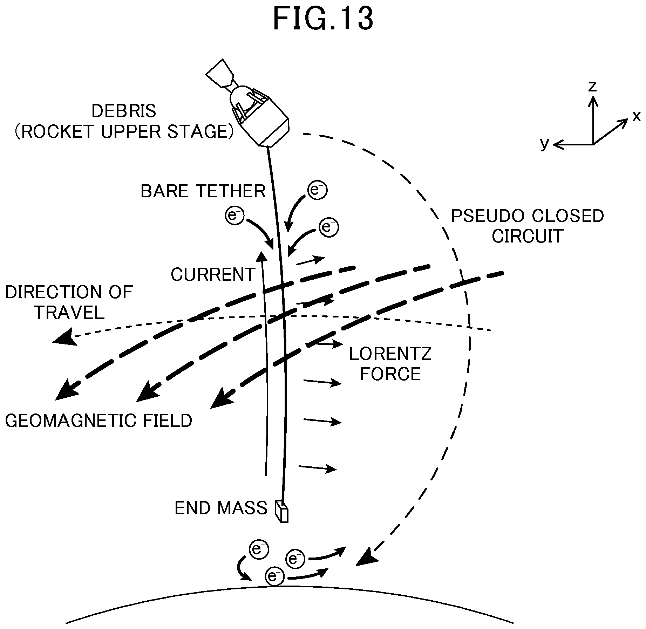

The approach of using an electrodynamic tether involves attaching to space debris an electroconductive tether (or string) made of metallic fibers such as aluminum, electroconductive fibers or the like and having a length on the order of several kilometers, and feeding a current through the electroconductive tether, thereby causing a descent of an altitude of the space debris by interference with a geomagnetic field (see Fig. 13).

Specifically, as illustrated in Fig. 13, an electroconductive tether is attached in a vertical direction (defined as a -z direction) to space debris such as an upper stage of a rocket orbiting the earth (a direction of travel of such an orbital motion is defined as a y direction) in a geomagnetic field (whose direction is defined as a -x direction). The electroconductive tether is not provided with insulating coating (that is, the tether is a bare tether; however, if an electron collector is formed of a hollow cathode or the like, the tether may be provided with the insulating coating). An electron source (i.e. an electron emitter) such as a field emission cathode is disposed within an end mass on the other end of the electroconductive tether.

When the electroconductive tether moves across a line of magnetic force of the geomagnetic field by orbiting together with the space debris, an induction electromotive force is generated on the electroconductive tether by the law of electromagnetic induction, so that an induction current flows through the electroconductive tether in a direction (i.e. a z direction) from the electron source toward the space debris. Here, the electron source and the bare tether (or the electron collector) formed on both ends of the electroconductive tether exchange electrons with plasma present in orbit around the earth, so that a pseudo closed circuit including the electroconductive tether is formed as shown by a dashed line in Fig. 13. The above-described induction current flows through the pseudo closed circuit.

Further, the above-mentioned induction current is subjected to action of Lorentz force from the geomagnetic field (as indicated by "LORENTZ FORCE" in Fig. 13, whose direction is a -y direction), and thus, a force in the -y direction, i.e. in a direction opposite to the direction of travel, acts also on the electroconductive tether. This force acts as a braking force on the electroconductive tether and the space debris, thus gradually decelerating the orbital motion of the space debris and hence causing a descent of the orbit thereof. The space debris whose orbit has descended enters the earth's atmosphere and burns out, or falls down to the earth (refer to paragraph [0003] in Patent Document 1).

The approach of using the electrodynamic tether does not need fuel and also has the advantage of relatively easy attachment to space debris because of producing minute thrust (or braking force). Using the above-mentioned current generation mechanism utilizing an induction electromotive force generated by the electroconductive tether moving across a magnetic field, in principle, also eliminates a need for external power supply, and thus, this approach is considered to make it possible to achieve substantially passive space debris removal. The approach of using the electrodynamic tether is considered to render implementable a method in which an artificial satellite for debris removal mounts a plurality of electrodynamic tether packages and goes around attaching the tether packages to pieces of space debris near the artificial satellite in a congested orbit, and hence it has been proposed that a single artificial satellite for debris removal can be used to remove a plurality of pieces of space debris and thereby achieve cost reduction of space debris removal operation.

Meanwhile, removal of space debris takes about several months to a year since the thrust generated by the use of the electrodynamic tether is minute. Moreover, there is a fear that, because of being generally long, the electroconductive tether may collide with an operating satellite or space debris. Occurrence of a collision causes damage to the operating satellite or cuts off the electroconductive tether, which in turn makes it impossible to operate the satellite or the tether thereafter. Moreover, long-term operation of the electrodynamic tether leads to the problem of causing a gradual increase in an angle of oscillation and hence reducing efficiency of orbit descent. In the worst case, the tether rotates, which thus makes its orbit descent impossible. The heretofore proposed methods take no measures for collision avoidance operation or re-entry control for dealing with such problems. Under no re-entry control conditions, debris, if large-sized, may fall to the ground without being melted, which thus may cause damage.

Document JP 2010 285137 A discloses a method for dropping space debris on the earth or changing the orbit of any space debris. This is achieved by receiving a very small amount of atmospheric gas and solar radiation pressure by a circular or polygonal film or by a balloon or an air-mattress shaped structure and by attaching it to the space debris.

Document US 6 116 544 A discloses a method of operating a conductive tether attached to a space object by controlling the amount of electric current flowing in the conductive tether in order to vary the angle of the tether to the local vertical between the space object and a celestial body.

Document WO 2013/065795 A1 discloses a device for removing space debris comprising a propulsion device for performing the approach and attitude control on target debris, a capturing device having a harpoon which may be ejected toward the target debris, and an observation device for calculating a capture position and a capture attitude at which the harpoon can be driven into a hollow portion of the target debris. Furthermore, the space debris removing device comprises a deceleration device directly or indirectly connected to the harpoon for decelerating the target debris, and a body part on which the propulsion device, the capture device, the observation device and the deceleration device are mounted.

Document US 2012/292449 A1 discloses an in-space processing and delivery system around a celestial body having a magnetic field. The system includes at least one facility having supplies and configured for in-space recycling and manufacturing to produce processed objects utilizing space debris objects and the supplies. The system further comprises several space vehicles to deliver the space debris objects as well as new supplies from respective orbits to the at least one facility using electrodynamic propulsion and to deliver the processed objects from the at least one facility to their destination orbits using electrodynamic propulsion.

### PRIOR ART DOCUMENT

### Patent Document

Patent Document 1: Japanese Patent Application Publication No. 2004-98959

### SUMMARY OF THE INVENTION

### Problems to be Solved by the Invention

In view of the above circumstances, an object of the present invention is to solve the problem that a satellite for space debris removal is high in cost due to its complicated construction and heavy weight and a high degree of requirements for reliability, or the problem that collision avoidance operation or re-entry control is not possible with use of a low-cost electrodynamic tether.

### Means for Solving the Problems

An embodiment not belonging to the present invention provides an orbit descent method for space debris, the method comprising the steps of: bringing an artificial satellite extendably holding an electroconductive tether near to space debris orbiting around a heavenly body; attaching one end of the electroconductive tether to the space debris by an electroconductive tether attachment mechanism; extending the electroconductive tether, with the other end thereof held by the artificial satellite, by an electroconductive tether extension mechanism, and causing the orbits of the integrated and orbiting artificial satellite, electroconductive tether and space debris to descend toward the heavenly body, by action of an electromagnetic effect of a magnetic field around the heavenly body upon the electroconductive tether; and changing the orbital motions of the integrated and orbiting artificial satellite, electroconductive tether and space debris, under control by the artificial satellite.

According to the above-described method, the artificial satellite mounting the electroconductive tether approaches the space debris, the end of the electroconductive tether is attached to the space debris, and the orbits of the electroconductive tether and also the artificial satellite, as integrated with the space debris, are caused to descend. This enables causing the orbit of the space debris to descend, while controlling the orbital motion of the space debris, through the use of the artificial satellite integrated with the space debris. Also, the above-described method may be implemented in a form in which small-sized satellites, in particular, are rocketed in the form of a plurality of clusters as the above-described artificial satellite and are distributed in a congested orbit to remove a plurality of pieces of debris, or the artificial satellite may be launched piggyback together with another satellite.

In the above-described method, the step of changing the orbital motions of the integrated and orbiting artificial satellite, electroconductive tether and space debris under control by the artificial satellite may include the step of changing the orbital motions of the integrated and orbiting artificial satellite, electroconductive tether and space debris, by a propulsion system comprised in the artificial satellite. As a specific example of the control of the orbital motion of the space debris through the use of the artificial satellite, the propulsion system of the artificial satellite, for instance, may be used to generate thrust or a braking force and thereby change the orbital motion. Thus, for example when a collision with another piece of space debris is predicted, the propulsion system can operate to change an orbit of space debris targeted for removal and thereby avoid the collision.

In the above-described method, the step of changing the orbital motions of the integrated and orbiting artificial satellite, electroconductive tether and space debris under control by the artificial satellite may include the step of changing the orbital motions of the integrated and orbiting artificial satellite, electroconductive tether and space debris, by the artificial satellite applying a voltage to the electroconductive tether to change a current passing through the electroconductive tether. Since Lorentz force acting on the electroconductive tether depends on the current passing through the electroconductive tether, the orbital motion of the space debris can be controlled by using an external power supply or the like to increase the current and thereby cause a rapid descent of the orbit of the space debris, or by doing the like.

In the above-described method, the step of changing the orbital motions of the integrated and orbiting artificial satellite, electroconductive tether and space debris under control by the artificial satellite may include the step of changing the orbital motions of the integrated and orbiting artificial satellite, electroconductive tether and space debris, by switching on or off the current passing through the electroconductive tether. As an example, a switching circuit may be disposed between an electron emitter and the electroconductive tether to perform switching between their connected and disconnected states and thereby switch the current between its on and off states and thus control generation, in itself, of thrust or a braking force on the space debris or the like. This enables changing the orbit of the space debris and thereby avoiding a collision with another piece of space debris or the like.

In the above-described method, the step of changing the orbital motions of the integrated and orbiting artificial satellite, electroconductive tether and space debris under control by the artificial satellite may include the step of simultaneously performing suppression of mutual oscillatory motions and descent of the orbits, by generating a braking force whose orbital direction component is negative, by the propulsion system comprised in the artificial satellite, at the time at which an orbital direction component of a velocity vector of the artificial satellite relative to the space debris is positive, when the space debris and the artificial satellite are making the mutual oscillatory motions. The space debris and the artificial satellite may make the mutual oscillatory motions due to various factors, such as the fact that the relative magnitudes of a centrifugal force and gravity may vary according to altitude with respect to the heavenly body, and the presence of Coriolis force and air resistance; however, the braking force whose orbital direction component is negative is generated by the propulsion system at the above-mentioned time thereby to not only decelerate the orbital motions and cause a descent of the orbits, but also exert the braking force on a relative motion of the artificial satellite with respect to the space debris, thus simultaneously enabling the suppression of the mutual oscillatory motions.

Preferably, the step of simultaneously performing the suppression of the mutual oscillatory motions and the descent of the orbits includes the step of simultaneously performing the suppression of the mutual oscillatory motions and the descent of the orbits, by generating the braking force whose orbital direction component is negative, by the propulsion system comprised in the artificial satellite, at the time at which the orbital direction component of the velocity vector of the artificial satellite relative to the space debris is positive and a magnitude of an angle formed between a vertical direction and an orbital direction by the artificial satellite with respect to the space debris is equal to or less than a predetermined value or is less than the predetermined value. When the orbital direction component of the velocity vector of the artificial satellite relative to the space debris is positive and the angle formed between the vertical direction and the orbital direction by the artificial satellite with respect to the space debris is equal to zero (i.e. when the electroconductive tether extends in the vertical direction), the mutual oscillatory motions between the space debris and the artificial satellite can be completely stopped by generating a braking force of such magnitude as to completely cancel a relative velocity of the artificial satellite with respect to the space debris, and therefore, it is desirable that the braking force be exerted at the time at which the above-described angle is equal to zero. Taking it into account that there are limitations on accuracy of measurement of the above-described angle formed by the artificial satellite with respect to the space debris and on operation timing control of the propulsion system, however, it may be difficult to set the magnitude of the above-described angle exactly equal to zero. Moreover, if the braking force is generated over a certain length of time, it is late to start generating the braking force at the time when the above-described angle reaches zero, and thus, such generation should be started somewhat earlier. Preferably, in view of the above, a predetermined value (which is preferably zero but may be anything other than zero) is arbitrarily set according to individual conditions of specific implementations including the limitations on the accuracy of measurement and the control and the length of time for braking force generation, and the braking force is generated as mentioned above, at the time at which the magnitude of the above-described angle is equal to or less than the predetermined value or is less than the predetermined value.

In the above-described method, the step of changing the orbital motions of the integrated and orbiting artificial satellite, electroconductive tether and space debris under control by the artificial satellite may include the steps of: changing an attitude of the electroconductive tether so that the electroconductive tether extends along the orbital direction, by the propulsion system comprised in the artificial satellite, at the time at which an altitude of the integrated and orbiting artificial satellite, electroconductive tether and space debris relative to the heavenly body is equal to or less than a predetermined value or is less than the predetermined value; and causing the orbits of the integrated and orbiting artificial satellite, electroconductive tether and space debris to descend toward the heavenly body, by the propulsion system generating the braking force whose orbital direction component is negative. After a sufficient drop in the altitude of the space debris, the propulsion system of the artificial satellite is used to rotate the electroconductive tether and change its direction and then apply thrust for re-entry, thereby enabling re-entry into an area targeting the space debris. In particular, the attitude of the electroconductive tether is changed so that the electroconductive tether extends along the orbital direction, and thereby, after that, during braking force generation, the space debris and the artificial satellite can be prevented from oscillating relative to each other. The time when the attitude of the electroconductive tether is to be changed, or specifically, to what extent of altitude the space debris or the like descends at that time, should be arbitrarily set according to individual conditions of specific implementations such as the capabilities of the propulsion system and the size of the space debris (for example, if the electroconductive tether burns out at or below the altitude of the atmosphere, the attitude cannot be changed); however, generally, lower altitude produces lower dynamic energy of the space debris or the like and hence lower thrust required to change the attitude, and therefore, it is preferable that the attitude be changed at the time at which the altitude is equal to or less than a predetermined somewhat low altitude or is less than the predetermined altitude.

The present invention provides an orbit descent system for space debris, the system comprising: an artificial satellite; an electroconductive tether extendably held by the artificial satellite wherein an electron collector is formed on one end of the electroconductive tether or a part of the electroconductive tether; an electroconductive tether attachment mechanism; an electroconductive tether extension mechanism and an electron emitter electrically connected to another end of the electroconductive tether for emitting electrons to ambient plasma in order to form a pseudo closed circuit through the electron emitter, the ambient plasma, the electron collector and the electroconductive tether, wherein the system is configured so that the artificial satellite approaches space debris orbiting around a heavenly body, the electroconductive tether attachment mechanism attaches one end of the electroconductive tether to the space debris, and further, the electroconductive tether extension mechanism extends the electroconductive tether with the other end thereof held by the artificial satellite, whereby the orbits of the integrated and orbiting artificial satellite, electroconductive tether and space debris are caused to descend toward the heavenly body, by action of an electromagnetic effect of a magnetic field around the heavenly body upon the extended electroconductive tether, the electromagnetic effect being such that the magnetic field causes an induction current through the pseudo closed circuit formed by the electrons emitted by the electron emitter resulting in a Lorentz force from the magnetic field causing the orbits of the integrated and orbiting artificial satellite, electroconductive tether and space debris to descend, and the orbital motions of the integrated and orbiting artificial satellite, electroconductive tether and space debris are changed under control by the artificial satellite. The system provided by the present invention is configured to change the orbital motions of the integrated and orbiting artificial satellite, electroconductive tether and space debris, by a propulsion system comprised in the artificial satellite.

The system according to the invention enables causing the orbit of the space debris to descend, while controlling the orbital motion of the space debris, through the use of the artificial satellite integrated with the space debris, as is the case with the above-mentioned method. As previously mentioned, such a configuration enables collision avoidance operation or the like of the artificial satellite.

The above-described system provided by the present invention may comprise a power supply system adapted for the artificial satellite to apply a voltage to the electroconductive tether, and may be configured to change the orbital motions of the integrated and orbiting artificial satellite, electroconductive tether and space debris, by applying the voltage to change a current passing through the electroconductive tether. As previously mentioned, with such a configuration, the orbital motion of the space debris can be controlled by using an external power supply or the like to increase the current passing through the electroconductive tether and thereby cause a rapid descent of the orbit of the space debris, or by doing the like.

The above-described system provided by the present invention may comprise a switching circuit for switching on or off the current passing through the electroconductive tether, and the system may be configured to switch the current between its on and off states thereby to change the orbital motions of the integrated and orbiting artificial satellite, electroconductive tether and space debris. As previously mentioned, such a configuration enables controlling generation, in itself, of thrust or a braking force on the space debris or the like, thereby changing the orbit of the space debris and thus avoiding a collision with another piece of space debris or the like.

An embodiment not belonging to the present invention provides an orbit changing method for an artificial satellite, the method comprising the steps of: extendably holding an electroconductive tether, extending the electroconductive tether from the artificial satellite orbiting around a heavenly body, by an electroconductive tether extension mechanism, and changing the orbits of the integrated and orbiting artificial satellite and electroconductive tether, by action of an electromagnetic effect of a magnetic field around the heavenly body upon the electroconductive tether; and changing the orbital motions of the integrated and orbiting artificial satellite and electroconductive tether, under control by the artificial satellite. Utilization of the electromagnetic effect on the electroconductive tether, without being limited to removal of space debris, enables changing the orbit of the artificial satellite, based on the same principles as those of the above-mentioned method. As an example, application of the method to an artificial satellite orbiting around Jupiter enables causing not only an orbit descent but also an orbit ascent, since Jupiter is great in speed of rotation of its magnetic field due to its rotation. Specifically, in the case of Jupiter, in an orbit higher than a certain altitude, the speed of the magnetic field of Jupiter (which rotates with the Jupiter rotation because of being fixed to the Jupiter's pole) is greater than a velocity at which the artificial satellite or a probe orbits around Jupiter, so that the magnetic field gets ahead of the artificial satellite or the probe, and hence an induction electromotive force and Lorentz force are produced relatively in a direction which appears to be under situations where the orbiting velocity of the artificial satellite or the probe is opposite in direction to its actual state. (In an example in Fig. 13 as used here, although the actual direction of travel of the artificial satellite or the probe (or the end mass), as making an orbital motion, is the y direction, the speed of the rotation of Jupiter in the y direction is greater than the velocity of the orbital motion, so that a y direction component of an apparent velocity of the artificial satellite or the probe as seen from Jupiter is negative, and hence a direction in which the electroconductive tether moves across the line of magnetic force is likewise negative in the y direction. Thus, an induction current flows through the electroconductive tether in the -z direction which is opposite to the direction in Fig. 13, so that Lorentz force whose y direction component is positive acts on the electroconductive tether. The motion of the artificial satellite in the orbital direction is accelerated to cause the orbit to ascend higher. In this case, since the induction current is opposite in its direction, it is necessary that the electroconductive tether be extended from the artificial satellite or the probe (or the end mass) in a direction, i.e. the -z direction, opposite to that in Fig. 13, thereby to reverse the relative positions of the electron collector and the electron emitter.)

An embodiment not belonging to the present invention provides an orbit changing system for an artificial satellite, the system comprising: an artificial satellite; an electroconductive tether extendably held by the artificial satellite; and an electroconductive tether extension mechanism, wherein the system is configured for extending the electroconductive tether by the electroconductive tether extension mechanism, and thereby, changing the orbits of the integrated artificial satellite and electroconductive tether orbiting around a heavenly body, by action of an electromagnetic effect of a magnetic field around the heavenly body upon the extended electroconductive tether, and changing the orbital motions of the integrated artificial satellite and electroconductive tether orbiting around the heavenly body, under control by the artificial satellite. This system enables implementing the above-described orbit changing method for the artificial satellite.

### Advantageous Effects of the Invention

According to the present invention, an electromagnetic effect of a magnetic field of the earth or the like is mainly utilized to cause a descent of an orbit of space debris, thus eliminating a need for an artificial satellite to mount a large-scale propulsion system, which therefore enables achieving size reduction and simplification and hence cost reduction of a conventional satellite for debris removal which may become higher in cost due to its large size and complicated construction. Moreover, applying thrust (or a braking force) in a direction of orbit descent, while suppressing oscillation of an electroconductive tether, enables avoiding a collision, while reducing a length of time for orbit descent. An altitude of the space debris is sufficiently dropped by the braking force by action of the electromagnetic effect of the magnetic field upon the electroconductive tether, and thereafter, the electroconductive tether is rotated to change its direction, and then, thrust for re-entry is applied. Thus, the amount of increase in velocity required for the re-entry can be reduced, so that the re-entry can be completed before a motion of the electroconductive tether becomes unstable and hence causes damage to the artificial satellite. If a large-sized satellite for removing a plurality of pieces of space debris, which has heretofore been proposed, fails when removing the first piece of space debris, the plurality of pieces of space debris cannot be removed, and moreover, the defective large-sized satellite remains in orbit as large-sized space debris. In order to avoid such an occurrence, such a large-sized satellite requires a high degree of reliability and thus increases in cost; however, use of a small-sized satellite intended to remove, one by one, pieces of space debris enables achieving a lower degree of reliability required and hence lower cost. In addition, a satellite is launched piggyback or in the form of cluster as mentioned above, thereby enabling a reduction in launch cost.

### BRIEF DESCRIPTION OF THE DRAWINGS

[Fig. 1] Fig. 1 is a schematic diagram of overall configuration of a space debris orbit descent system according to an embodiment of the present invention.
[Fig. 2] Fig. 2 is a schematic diagram of configuration of a body part of an artificial satellite illustrated in Fig. 1.
[Fig. 2a] Fig. 2a is a diagram of assistance in explaining a drum type reel system and a spool type reel system (outer unwinding and inner unwinding).
[Fig. 3] Fig. 3 is a schematic diagram of configuration of an electron emitter (or a field emission cathode) included in the artificial satellite in Fig. 1.
[Fig. 4] Fig. 4 is a schematic diagram of configuration of a robot hand mounted to the artificial satellite in Fig. 1.
[Fig. 5] Fig. 5 is a schematic diagram illustrating the artificial satellite in Fig. 1 as capturing a target satellite (or space debris).
[Fig. 5a] Fig. 5a is a schematic diagram of a preceding phase of extending an electroconductive tether without capturing the target satellite, as distinct from Fig. 5.
[Fig. 6] Fig. 6 is a schematic diagram illustrating the electroconductive tether as extended from the artificial satellite, after capture of the target satellite.
[Fig. 6a] Fig. 6a is a schematic diagram of the electroconductive tether as extended without capturing the target satellite, as distinct from Fig. 6.
[Fig. 7] Fig. 7 is a diagram of assistance in explaining operation timing of a propulsion system comprised in the artificial satellite.
[Fig. 8] Fig. 8 is a graph showing results obtained by performing computer simulations on behavior of the electroconductive tether after a braking force has been generated by the propulsion system.
[Fig. 8a] Fig. 8 is a graph showing results obtained by performing computer simulations on behavior of the electroconductive tether after a braking force has been generated by the propulsion system.
[Fig. 9a] Fig. 9a is a diagram of assistance in further explaining preferred timing of operation of the propulsion system.
[Fig. 9b] Fig. 9b is a graph showing results obtained by performing computer simulations on the behavior of the electroconductive tether, associated with the timing of operation described with reference to Fig. 9a.
[Fig. 10a] Fig. 10a is a diagram of assistance in explaining operation of the propulsion system for changing an attitude of the electroconductive tether.
[Fig. 10b] Fig. 10b is a diagram of assistance in explaining operation of the propulsion system for applying thrust (or a braking force) for re-entry after changing the attitude of the electroconductive tether.
[Fig. 11] Fig. 11 is a graph showing results obtained by performing computer simulations on the behavior of the electroconductive tether, associated with the attitude change and the re-entry described with reference to Figs. 10a and 10b, respectively.
[Fig. 11a] Fig. 11a is also a graph showing results obtained by performing computer simulations on the behavior of the electroconductive tether, associated with the attitude change and the re-entry described with reference to Figs. 10a and 10b, respectively.
[Fig. 12] Fig. 12 is a graph showing results of simulations after addition of thrust to a tether during towing, in a conventional method for space debris orbit descent.
[Fig. 13] Fig. 13 is a diagram of assistance in explaining the principle of generation of a braking force by an electroconductive tether moving across a geomagnetic field.

### DESCRIPTION OF THE EMBODIMENTS

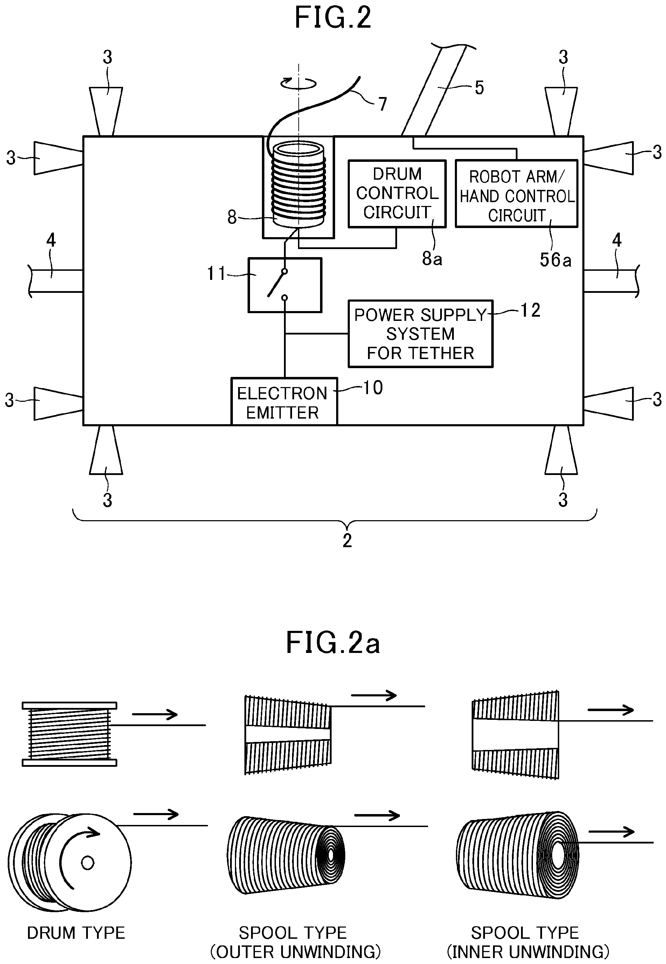

Description will be given below with reference to the drawings with regard to embodiments of an orbit descent method and system for space debris and an orbit changing method and system for an artificial satellite. Only the orbit descent system belongs to the invention. It is to be noted that the orbit descent method and system for the space debris and the orbit changing method and system for the artificial satellite are not limited to particular specific constructions illustrated in the drawings and their associated description but may be modified as appropriate. For instance, in Examples given below, an orbit descent is performed for space debris orbiting around the earth; however, in future, even at the occurrence of space debris orbiting around any heavenly body other than the earth, the orbit descent may be implemented in accordance with the present invention, provided that the heavenly body has a magnetic field therearound. The present invention is limited to the orbit descent of the space debris. However, an embodiment not belonging to the invention may also be implemented as an orbit changing method for an artificial satellite or a probe having an electrodynamic tether. Moreover, a length of the electroconductive tether is not limited to the order of several kilometers but may be arbitrarily changed according to the size or the like of space debris (which may not be necessarily a satellite) or the probe. Further, the present invention does not need to include every element included in the embodiments described below. For example, in a configuration illustrated in Fig. 2, the other end of an electroconductive tether 7 fixed to a drum 8 may be connected directly to an electron emitter 10 without use of a switching circuit 11, or a power supply system 12 for tether may not necessarily be used.

### Example 1

### Configuration of Space Debris Orbit Descent System

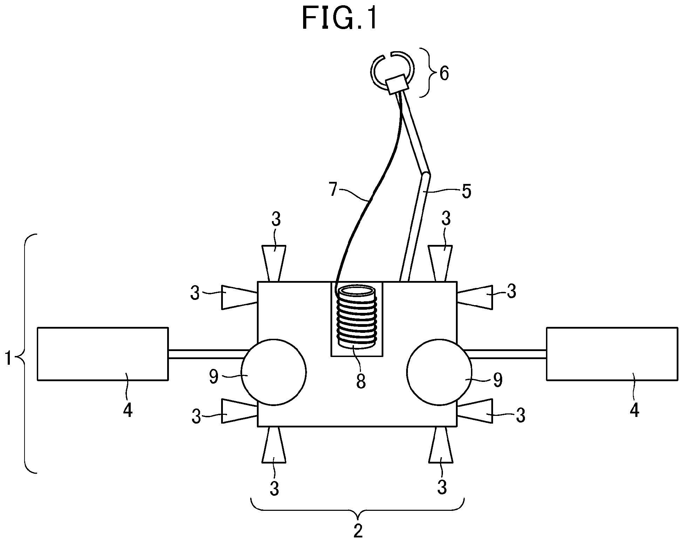

Fig. 1 illustrates a schematic diagram of overall configuration of a space debris orbit descent system according to an embodiment of the present invention. The space debris orbit descent system includes an artificial satellite 1, a robot arm 5 mounted to the artificial satellite 1, a robot hand 6 detachably mounted to the robot arm 5, and an electroconductive tether 7 wound around a drum 8 built in a body part 2 of the artificial satellite 1 and mounted at one end to the robot hand 6 and fixed at the other end to the drum 8. The electroconductive tether 7 is a string-like body made of an electroconductive material such as metallic fibers such as aluminum or electroconductive high-strength fibers, and may have any specific structure such as a net-like form. The artificial satellite 1 is provided with a propulsion device 3 for generating thrust (or a braking force) by a solid fuel engine, an ion engine or the like, a solar cell paddle 4 for converting sunlight into electric power, an antenna 9 for receiving a control signal from a ground control center and transmitting an information signal to the ground control center, and the like.

Fig. 2 illustrates a schematic diagram of configuration of the body part 2 of the artificial satellite 1. However, structural elements for performing basic operation of the artificial satellite 1 are omitted from Fig. 2; specifically, the structural elements include control circuitry for the propulsion device 3 and the solar cell paddle 4, distributor circuitry for electric power obtained through conversion by the solar cell paddle 4, transmitter/receiver circuitry for transmission and reception through the antenna 9, and transfer circuitry for transferring a control signal or the like received from the control center to each individual internal circuit. The structural elements may be configured as appropriate by those skilled in the art.

In Fig. 2, a robot arm/hand control circuit 56a is a circuit for transmitting a control signal to the robot arm 5 and the robot hand 6 to operate them, according to a control signal received from the ground control center. (If the artificial satellite 1 is of an autonomous control type, the robot arm/hand control circuit 56a may operate according to an internally generated control signal. The same goes for operation of other structural elements.) A drum control circuit 8a is a circuit for transmitting a control signal to a motor built in the drum 8 to operate the motor thereby to rotate the drum 8, according to a control signal received from the control center. Rotation of the drum 8 allows the electroconductive tether 7 to be unwound at one end.

Besides a drum type system in which the drum 8 is rotated to unwind the electroconductive tether 7 (or rotate the electroconductive tether 7 in itself together with the drum 8), a spool type system may be adopted; specifically, the electroconductive tether 7 is wound around a cylindrically or otherwise shaped core or is wound alone without use of the core and is unwound at one end so as to be extended (see Fig. 2a). The spool type system does not need the drum 8 and its built-in motor and the drum control circuit 8a. With the electroconductive tether 7 mounted at one end to the robot hand 6 and connected at the other end to a switching circuit 11 (or an electron emitter 10 if the switching circuit 11 is not used), the robot hand 6 is separated from the robot arm 5 in the same manner as the drum type system described later, and the propulsion device 3 is used to move the artificial satellite 1 away from the robot hand 6, so that the electroconductive tether 7 automatically unwinds and extends. The embodiment will be described below on the basis of the drum type system; however, even in a form in which the spool type system is used, the present invention is implementable with the same principles.

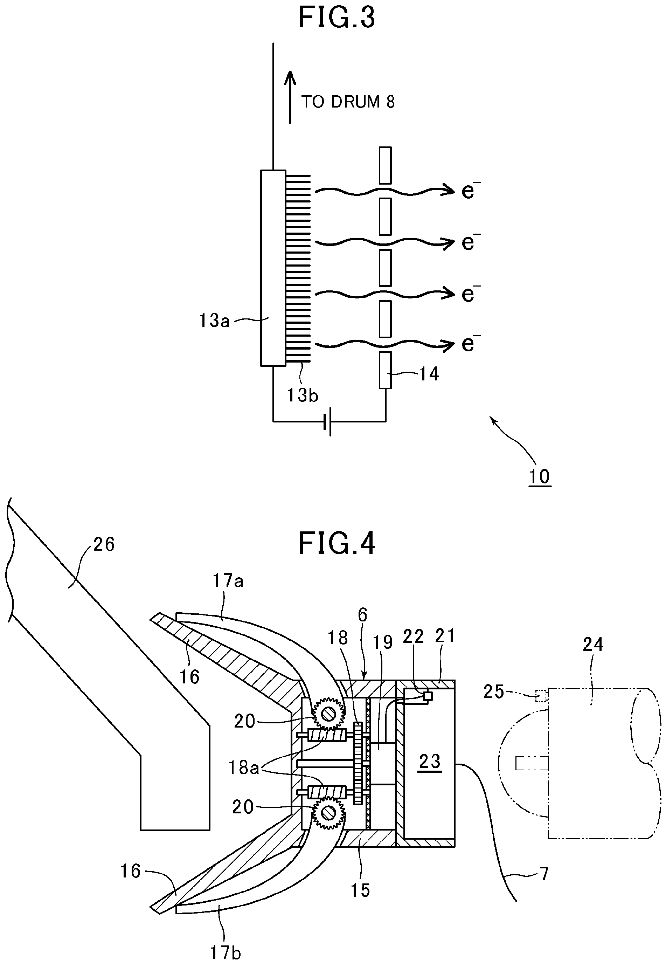

The other end of the electroconductive tether 7 fixed to the drum 8 as mentioned above is connected via the switching circuit 11 to the electron emitter 10 and a power supply system 12 for tether. The electron emitter 10 is an electron source such as a field emission cathode, and is a device for emitting electrons to ambient plasma to form a pseudo closed circuit described with reference to Fig. 13. Fig. 3 illustrates a configuration of the electron emitter 10 formed as the field emission cathode. The electron emitter 10 applies a voltage between a substrate 13a and a gate electrode 14 so that an emitter 13b made of carbon nanotube or the like and disposed on the substrate 13a emits electrons through gaps in the gate electrode 14. One end of the electroconductive tether 7 mounted to the robot hand 6 is configured as a bare tether or is provided with a hollow cathode or the like so that an electron collector is formed on the one end (not illustrated).

In Fig. 2, the switching circuit 11 is a switching circuit constructed of a switch such as a MOSFET (metal oxide semiconductor field effect transistor) and its control circuit, and is a circuit for switching the electroconductive tether 7, and the electron emitter 10 and the power supply system 12 for tether, between their electrically connected and disconnected states, according to a control signal received from the control center. The power supply system 12 for tether is a power supply system for applying a voltage to the electroconductive tether 7 to change a current passing through the electroconductive tether 7. As an example, the power supply system 12 for tether is constructed of a variable direct-current power supply connected in series between the electron emitter 10 and the switching circuit 11, and a control circuit for controlling the variable direct-current power supply to change an output voltage. The power supply system 12 for tether applies an arbitrary direct-current voltage to the pseudo closed circuit formed including the electroconductive tether 7 and ambient plasma, thereby to change the current passing through the electroconductive tether 7.

Fig. 4 illustrates a schematic diagram of configuration of the robot hand 6. Although the configuration of the robot hand 6 may be the same as that of a tether device 1 illustrated in Fig. 1 in Patent Document 1, a tether mechanism 30 described in Patent Document 1 is unnecessary. The robot hand 6 as used in the present invention may be different from the configuration disclosed in Patent Document 1, and may have any configuration, provided that it is capable of capturing a target portion of space debris.

The robot hand 6 has four fingers 17a to 17d (17c, 17d of which are not illustrated), and guides 16 abut against a target portion 26 of space debris to guide its position, and then the fingers 17a to 17d are closed to grip the target portion 26. Thereby, one end of the electroconductive tether 7 is fixed to the space debris. Operation of the fingers 17a to 17d is controlled by a power transmission/conversion mechanism 18 such as a gear transmission mechanism and its following rack and pinion, and an actuator 19 constructed of an electric motor and a rotation angle sensor (refer to paragraph [0017] in Patent Document 1). The actuator 19 drives the electric motor to provide output torque, which is then transmitted and converted by the power transmission/conversion mechanism 18 to rotate rod-like gears 18a, which then engage with gears on proximal portions 20, which in turn rotate to open or close the fingers 17a, 17b. Likewise, the fingers 17c, 17d are also mounted with the rod-like gears with the proximal portions in between, so that the fingers 17c, 17d operate to open and close by the same principles. Although the robot hand 6 is entirely covered with a casing 15, the casing 15 is formed with slits so that the fingers 17a to 17d are exposed through the slits and their opening and closing operations are not impeded. Here, operation of the actuator 19 is controlled by a control signal from the robot arm/hand control circuit 56a being inputted through an electrical connector 25 disposed on a gripping mechanism 24 of the robot arm 5 via an electrical connector 22 disposed on a handle 21 of the robot hand 6 to the actuator 19.

The robot hand 6 and the robot arm 5 are attachable to or detachable from each other by fitting the gripping mechanism 24 of the robot arm 5 in a recess 23 formed in the handle 21 of the robot hand 6, or by releasing such fitting. It is preferable that, when the robot hand 6 and the robot arm 5 are in their fitted state, an appropriate locking mechanism (not illustrated) be caused to act to provide firmer coupling between the robot hand 6 and the robot arm 5. Such attachment/detachment operation is also performed according to a control signal from the robot arm/hand control circuit 56a. Under a condition where the gripping mechanism 24 is fitted in the recess 23, the electrical connector 22 on the side of the robot hand 6 and the electrical connector 25 on the side of the robot arm 5 are coupled together, which thus enables supplying electric power to the robot hand 6, transmitting a control signal thereto or receiving an information signal therefrom, or doing the like.

### Operation of Space Debris Orbit Descent System

Next, description will be given with regard to operation of the space debris orbit descent system illustrated in Fig. 1.

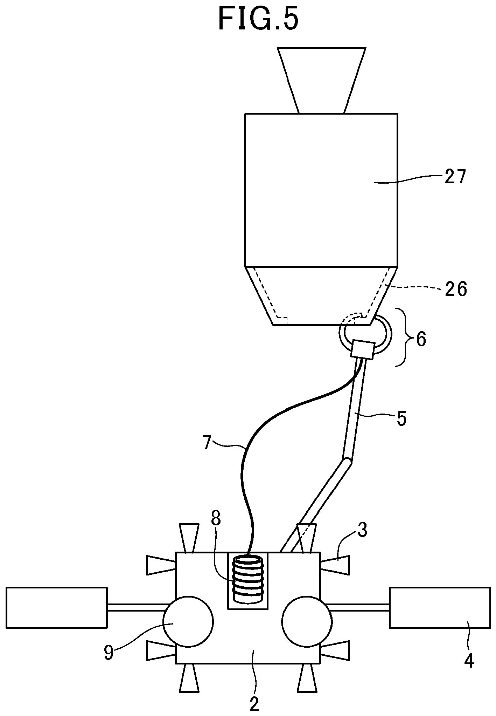

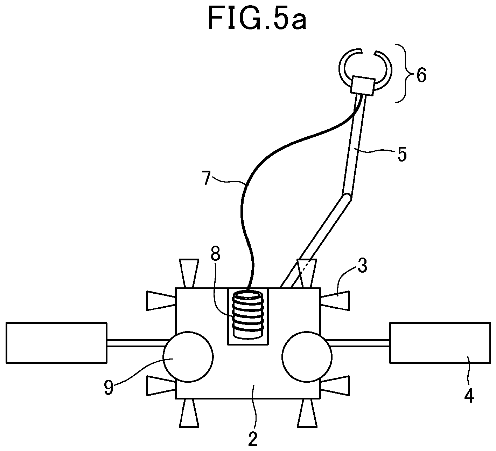

The space debris orbit descent system is rocketed or otherwise launched and orbits around the earth. The propulsion device 3 of the artificial satellite 1 appropriately generates thrust or a braking force according to a control signal from the ground control center, so that the space debris orbit descent system approaches space debris (hereinafter called a target satellite 27) to be disposed of. If necessary, a launch object is launched to the target satellite 27 to reduce the amount of angular motion or do the like, and thereafter, under a control signal from the robot arm/hand control circuit 56a, the robot arm 5 is operated so that the guides 16 of the robot hand 6 grasp the target portion 26 therebetween, and further, the fingers 17a to 17d are closed to grip the target portion 26, thereby capturing the target satellite 27. (See Fig. 5. A hollow region is present in a lower portion of the target satellite 27, and the target portion 26 as an outer wall of the hollow region is gripped.) Since one end of the electroconductive tether 7 is mounted to the robot hand 6, such capture results in attachment of the one end of the electroconductive tether 7 to the target satellite 27. The target satellite 27, the electroconductive tether 7 and the artificial satellite 1, which are integrated with one another, orbit around the earth.

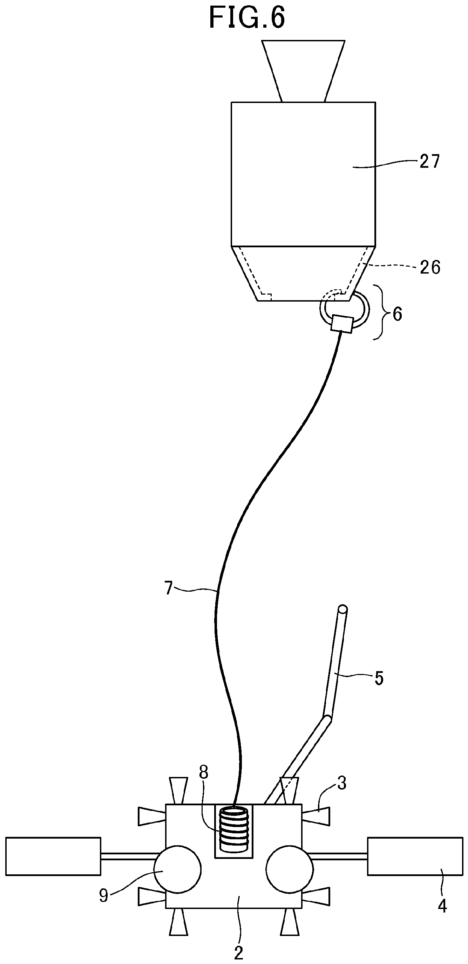

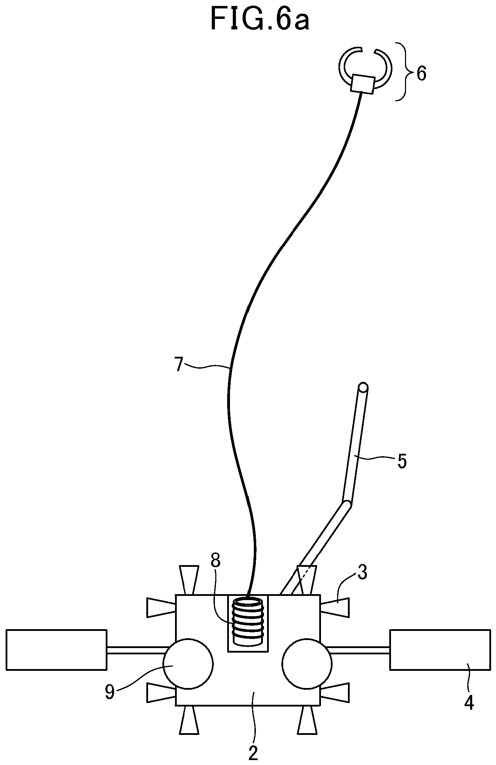

Under a control signal from the drum control circuit 8a, the built-in motor of the drum 8 then rotates to unwind the electroconductive tether 7 at one end. Also, under a control signal from the robot arm/hand control circuit 56a, the fitting of the recess 23 of the robot hand 6 and the gripping mechanism 24 of the robot arm 5 is released to separate the robot arm 5 and the robot hand 6 from each other. Further, the propulsion device 3 of the artificial satellite 1 generates thrust so that the artificial satellite 1 moves in a direction away from the target satellite 27. The above operation allows the electroconductive tether 7 to be extended as illustrated in Fig. 6. By terrestrial gravitation, the electroconductive tether 7 is extended generally along a vertical direction (or a direction of terrestrial gravitation). If the artificial satellite 1, even after extended, keeps on moving in the direction away from the target satellite 27, the propulsion device 3 generates an appropriate braking force to suppress such movement.

Under a condition where the other end of the electroconductive tether 7 fixed to the drum 8 and the electron emitter 10 are electrically connected together by the switching circuit 11, one end of the electroconductive tether 7 fixed to the robot hand 6 acts as the electron collector to collect electrons from ambient plasma, and the electron emitter 10 emits electrons to the ambient plasma to form a pseudo closed circuit as described with reference to Fig. 13, so that an induction current flows through the pseudo closed circuit under action of an electromagnetic effect of a geomagnetic field. The induction current is subjected to action of Lorentz force from the geomagnetic field, and thus, a braking force acts on the electroconductive tether 7 and on the target satellite 27 and the artificial satellite 1 orbiting and integrated with the electroconductive tether 7, so that their orbits descend.

Even during the orbit descent under the action of the Lorentz force from the geomagnetic field, the propulsion device 3 may generate thrust or a braking force to change the orbital motions of the integrated and orbiting artificial satellite 1, electroconductive tether 7 and target satellite 27. As an example, the orbit descent can be delayed by generating thrust in a direction of travel of the orbital motions, or the orbit descent can be advanced by generating thrust (or a braking force) in the opposite direction. Thrust or a braking force may also be generated in other directions to change the orbits and thereby avoid collisions with other pieces of space debris. Such control of the propulsion device 3 is performed under a control signal transmitted from the ground control center (or a control signal from an internal control system, if the artificial satellite 1 is of the autonomous control type).

Moreover, the power supply system 12 for tether may be used to change a current passing through the electroconductive tether 7 and thereby change the orbital motions of the integrated and orbiting artificial satellite 1, electroconductive tether 7 and target satellite 27. Specifically, the power supply system 12 for tether may apply a voltage of such polarity as to allow a current to flow from the artificial satellite 1 to the target satellite 27 in Fig. 6 (assuming that the directions of a magnetic field and the orbital motions are the same as those in a case where, in Fig. 13, the end mass is replaced by the artificial satellite 1), thereby increasing the tether current, which thus strengthens Lorentz force from a geomagnetic field and hence advances the orbit descent. Meanwhile, a voltage of the opposite polarity may be applied to delay the orbit descent. (Such a voltage as to allow flowing of a larger current than an induction current may also be applied to cause the orbits to ascend. Note that, in order to reverse the relative positions of the electron collector and the electron emitter, the propulsion device 3 moves the artificial satellite 1 or does the like to reverse the relative positions of the target satellite 27 and the artificial satellite 1.)

When the switching circuit 11 electrically disconnects the electroconductive tether 7 from the electron emitter 10 and the power supply system 12 for tether, no current flows through the electroconductive tether 7, thus causing no action of a braking force by Lorentz force from a geomagnetic field, so that the orbit descent can be stopped. A collision with another piece of space debris, for example, can be avoided by motion control using the propulsion device 3, the power supply system 12 for tether and the switching circuit 11.

### Suppression of Mutual Oscillatory Motions between Space Debris and Artificial Satellite

As previously mentioned, the integrated and orbiting target satellite 27 and artificial satellite 1 may oscillate relative to each other due to various factors. Description will be given below with regard to operation of a system for effecting an orbit descent, while suppressing mutual oscillatory motions.

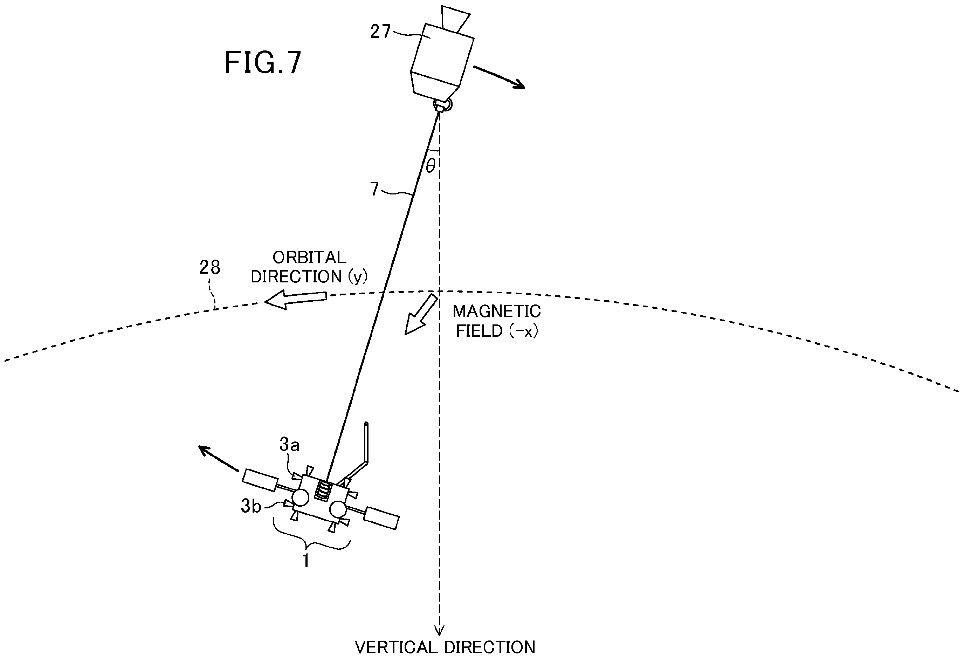

Fig. 7 illustrates a state in which the integrated target satellite 27 and artificial satellite 1 orbit while oscillating relative to each other (where a coordinate system is the same as that in Fig. 13). The orbits keep on descending under action of Lorentz force of a geomagnetic field upon the electroconductive tether 7. At the time illustrated in Fig. 7, the target satellite 27 and the artificial satellite 1 have relative velocities with respect to each other, as shown by arrows, respectively. In other words, an orbital direction component of a velocity vector of the artificial satellite 1 relative to the target satellite 27 is positive. At such time, propulsion systems 3a, 3b inject fuel or do the like to generate a braking force whose orbital direction component is negative, so that the braking force can act to cause a descent of the orbits of the artificial satellite 1, the electroconductive tether 7 and the target satellite 27 and also simultaneously suppress a relative motion of the artificial satellite 1 with respect to the target satellite 27. In short, the descent of the orbits and the suppression of the mutual oscillatory motions are simultaneously achieved.

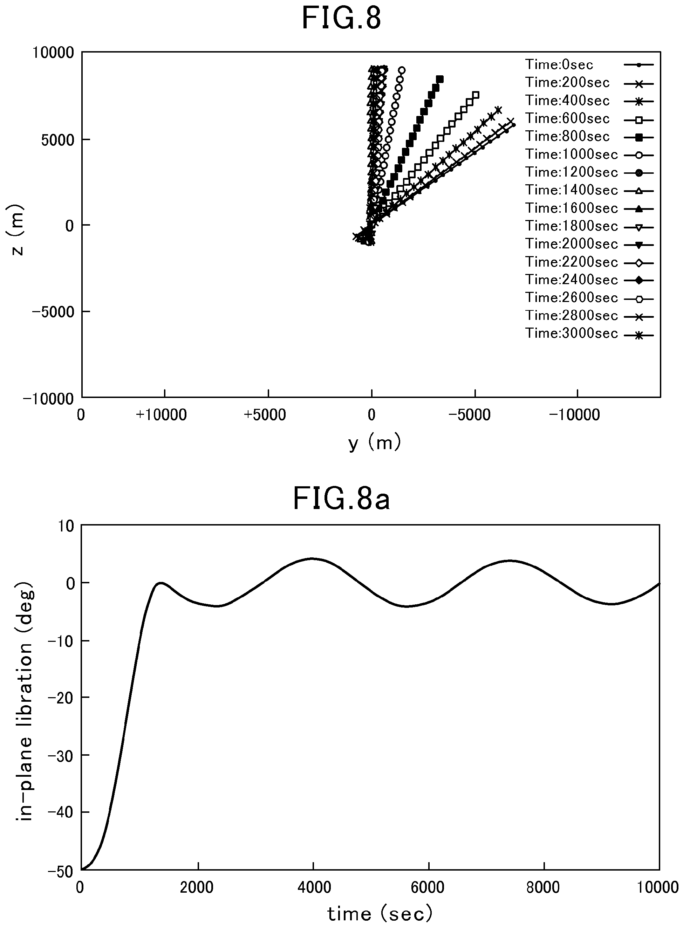

Numerical simulations were performed on behavior of the electroconductive tether 7 when such operation was performed. Conditions are as follows. In a circular orbit having an orbital altitude of 800 km above the earth (and having an orbital inclination of 98 degrees), space debris having a weight of 3400 kg and a removal satellite having a weight of 350 kg are integrated with each other through an electroconductive tether having a length of 10000 m. (Here, a direction of a magnetic field is set to be opposite to that in Fig. 7. Accordingly, the relative upper and lower positions of the space debris and the removal satellite are also the reverse of those in a configuration in Fig. 7. In this case, although a current flows in a direction opposite to the direction illustrated in Fig. 13, Lorentz force is produced in the same direction as that in Fig. 13 since the magnetic field is also opposite in its direction.) In such a state, the integrated space debris and removal satellite orbit while oscillating relative to each other. Under such conditions, an angle of rotation of the tether at time 0 (sec) is set at -50 degrees (where a counterclockwise direction with respect to a vertical direction is set to be positive), and the tether is set to rotate in the counterclockwise direction. At time 800 (sec) and thereafter, a thrust of 9.2 N was applied in a direction opposite to a direction of travel of orbital motions (or the counterclockwise direction) for about 610 seconds (where a change in velocity ΔV = 1.5 m/s). (In other words, a braking force was generated in a clockwise direction.) Fig. 8 shows the behavior of the electroconductive tether, as exhibited in this case, and Fig. 8a shows a change in the angle of rotation of the electroconductive tether with time. As can be seen from Figs. 8 and 8a, at the time 800 (sec), the tether had the velocity in the counterclockwise direction (that is, an orbital direction component was positive), and at such time, the tether was subjected to action of the braking force in the clockwise direction, so that its oscillatory motion was weakened. An amplitude of oscillation of the tether was reduced to about 4 degrees, as shown in the graph of Fig. 8a. Simultaneously, the braking force was applied, so that an altitude of perigee could be reduced by 6 km (or an orbit's long radius could be reduced by 3 km).

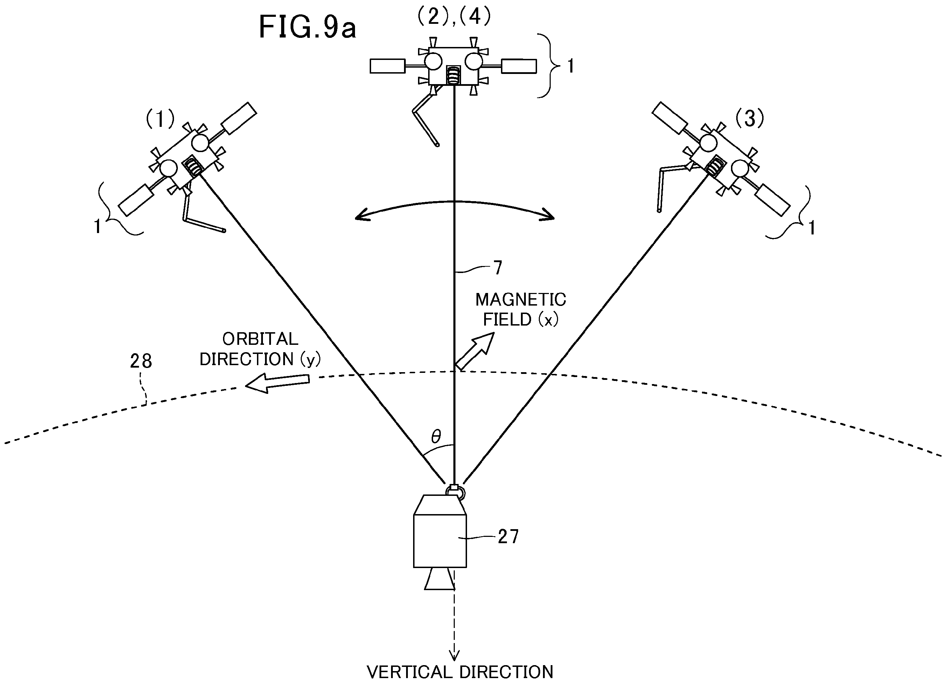

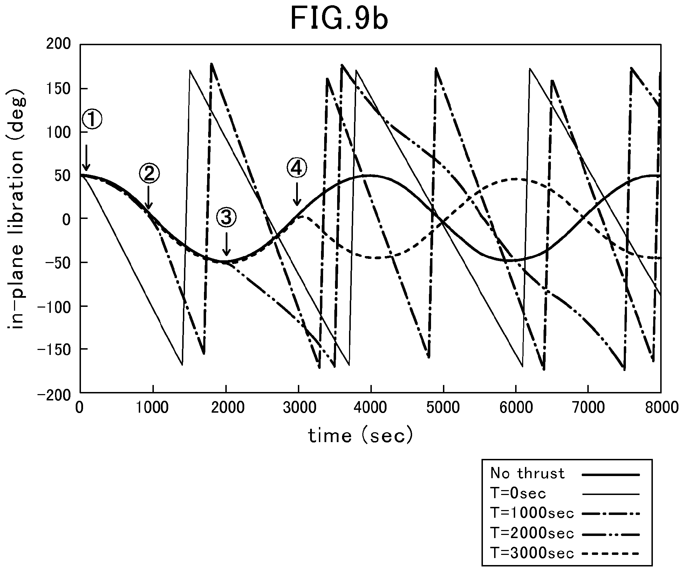

In the above-mentioned embodiment for simultaneously achieving the descent of the orbits and the suppression of the mutual oscillatory motions, it is particularly preferable that a braking force be generated at the time at which the orbital direction component of the velocity vector of the artificial satellite 1 relative to the target satellite 27 is positive and an angle θ of rotation in Fig. 7 is equal to zero (θ = 0). The reason is that the mutual oscillatory motions between the target satellite 27 and the artificial satellite 1 can be completely stopped by, at such time, generating such a braking force as to completely cancel the relative velocity of the artificial satellite 1 with respect to the target satellite 27. Such timing will be described with reference to Fig. 9a. (Here, a direction of a magnetic field is set to be opposite to that in Fig. 7. Accordingly, the relative upper and lower positions of the target satellite 27 and the artificial satellite 1 are also the reverse of those in the configuration in Fig. 7. A coordinate system is the same as that in Fig. 13.) The target satellite 27 and the artificial satellite 1 oscillate relative to each other, and, when the target satellite 27 is seen as fixed, the artificial satellite 1 oscillates to move sequentially from a position (1) to positions (2), (3), (4) in this order. When the artificial satellite 1 is in the position (2), although the angle θ of rotation is equal to zero, the orbital direction component of the velocity vector of the artificial satellite 1 relative to the target satellite 27 is negative, and thus, such time is not suitable as the time of generation of a braking force by the propulsion device 3. (If a braking force is generated at such time, oscillation of the electroconductive tether 7 is accelerated.) Meanwhile, when the artificial satellite 1 is in the position (4), the angle θ of rotation is equal to zero, and the orbital direction component of the velocity vector of the artificial satellite 1 relative to the target satellite 27 is positive, and thus, such time is suitable as the time of generation of a braking force. It is to be noted that, as previously mentioned, if a braking force is generated over a certain length of time, or if there are limitations on accuracy of measurement of an angle and on operation timing control of the propulsion device 3, a predetermined value may be arbitrarily set as the angle θ of rotation, and the braking force may be generated at the time at which a magnitude of the above-described angle is equal to or less than the predetermined value or is less than the predetermined value. Any sensor mounted on the artificial satellite 1 is used to measure the angle of rotation and the relative velocity (for example, a camera mounted on the artificial satellite 1 may be used to take an image), and an information signal is transmitted to the ground control center to inform the control center of measured results. The control center calculates the appropriate time of braking force generation based on the information signal, and then, a control signal is transmitted to the artificial satellite 1 so as to generate a braking force at such time. (In the case of the artificial satellite 1 of the autonomous control type, the control system in the artificial satellite 1, rather than the control center, controls the propulsion device 3 to perform the above-mentioned operation.) Fig. 9b shows results obtained by performing numerical simulations on changes in the angle of rotation with time, which occur when braking forces are exerted at the times at which the artificial satellite 1 is in the positions (1) to (4), respectively. (In Fig. 9b, circled numbers, 1 to 4, correspond to the positions (1) to (4), respectively, in Fig. 9a.) It can be seen that the largest amount of oscillation can be suppressed when a braking force is added at the time at which the artificial satellite 1 is in the position (4).

### Attitude Change and Re-entry Operation thereafter

As illustrated in Fig. 7 or the like, when the propulsion device 3 generates thrust or a braking force under a condition where the electroconductive tether 7 extends in the vertical direction or in a direction in which it obliquely crosses the orbit, mutual oscillatory motions between the target satellite 27 and the artificial satellite 1 may be caused unless the generation timing and magnitude of the thrust or braking force are controlled. It is therefore preferable that, in a phase of addition of thrust for re-entry after a drop in an altitude of the target satellite 27 or the like, an attitude of the electroconductive tether 7 be changed in advance so that the electroconductive tether 7 extends along the orbital direction.

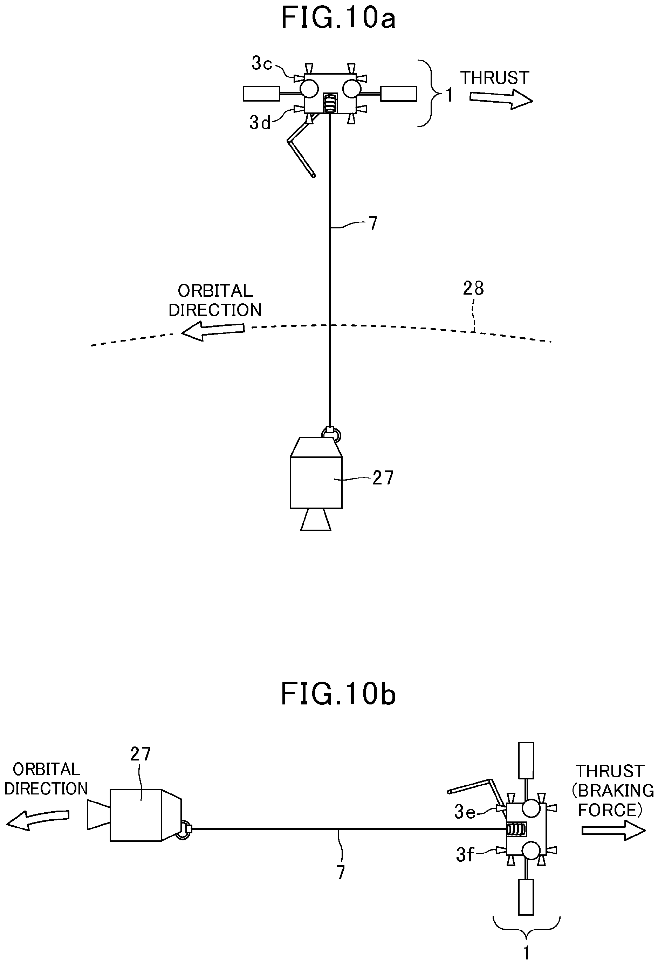

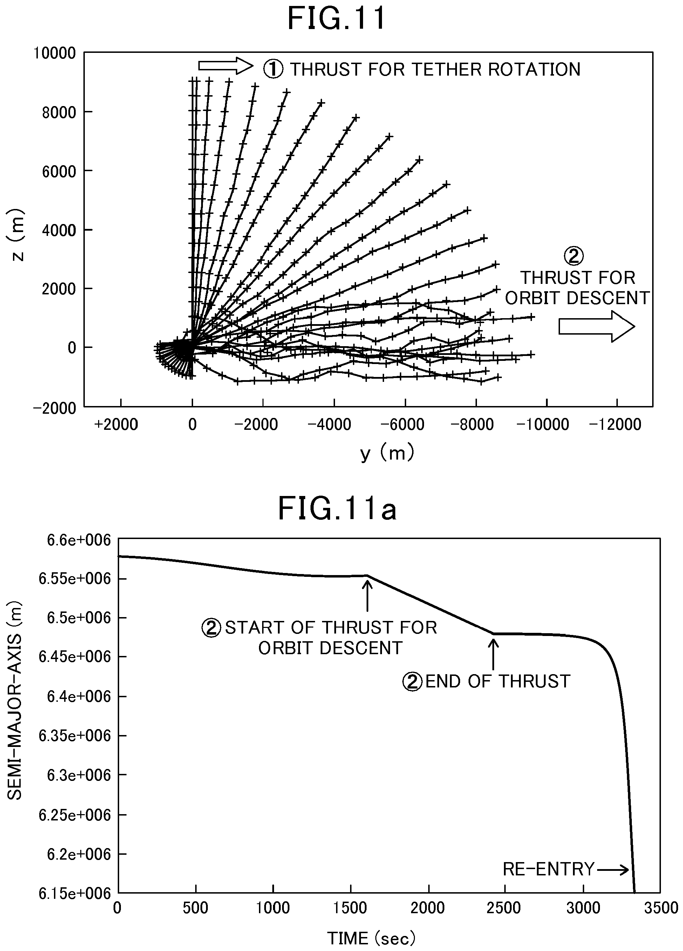

Specifically, as illustrated in Fig. 10a, propulsion devices 3c, 3d inject fuel or do the like to apply thrust to the artificial satellite 1, and thereby, as illustrated in Fig. 10b, the artificial satellite 1 rotates around the target satellite 27, so that the target satellite 27, the electroconductive tether 7 and the artificial satellite 1 change in attitude so as to extend along the orbital direction. Under such a condition, propulsion devices 3e, 3f generate thrust (or a braking force) for re-entry thereby to enable the target satellite 27 and the artificial satellite 1 to reenter toward the earth without oscillating relative to each other. Even if, at the time illustrated in Fig. 10a, the electroconductive tether 7 is inclined in a direction perpendicular to the sheet as seen in the drawing (or in an x direction in Fig. 13), each of the propulsion devices comprised in the artificial satellite 1 may make fine adjustments of the attitude thereby to change the attitude of the electroconductive tether 7 so that the electroconductive tether 7 extends along the orbital direction. Any sensor mounted on the artificial satellite 1 is used to detect the attitude of the electroconductive tether 7 (for example, the camera mounted on the artificial satellite 1 may be used to take an image), and an information signal is transmitted to the ground control center to inform the control center of detected results. The control center calculates an appropriate magnitude of thrust, an appropriate length of time of generation thereof, or the like, based on the information signal, and then, a control signal is transmitted to the artificial satellite 1 so as to generate optimum thrust. (In the case of the artificial satellite 1 of the autonomous control type, the control system in the artificial satellite 1, rather than the control center, controls the propulsion device 3 to perform the above-mentioned operation.) Figs. 11 and 11a show results of numerical simulations of such attitude change and re-entry operation. Alternatively, the robot hand 6, when capturing debris, may be provided with a blasting means or the like so as to destroy the target satellite 27 at the time of a sufficient drop in an altitude of the debris.

### Example 2

### Configuration of Artificial Satellite Orbit Changing System

The space debris orbit descent system illustrated in Fig. 1 is available also for use as an artificial satellite orbit changing system. In an example, the artificial satellite orbit changing system is based on the configuration and the principle of operation as described in Example 1 with reference to Figs. 1 to 4. The artificial satellite orbit changing system is the same as the space debris orbit descent system in that, in the configuration illustrated in Fig. 2, at least the switching circuit 11 and the power supply system 12 for tether may be excluded, and that not only the drum type system but also the spool type system (outer unwinding or inner unwinding) may be used to extend the electroconductive tether 7.

### Operation of Artificial Satellite Orbit Changing System

Operation of the artificial satellite orbit changing system is different in that it is not necessary to capture the target satellite 27, as compared to the operation of the space debris orbit descent system described in Example 1 with reference to Figs. 5, 6, and 7 to 11.

The artificial satellite orbit changing system is rocketed or otherwise launched and orbits around Jupiter, for example. As distinct from Example 1, the operation of approaching space debris is unnecessary (see Fig. 5a).

Under a control signal from the drum control circuit 8a, the built-in motor of the drum 8 then rotates to unwind the electroconductive tether 7 at one end. Also, under a control signal from the robot arm/hand control circuit 56a, the fitting of the recess 23 of the robot hand 6 and the gripping mechanism 24 of the robot arm 5 is released to separate the robot arm 5 and the robot hand 6 from each other. Further, the propulsion device 3 of the artificial satellite 1 generates thrust so that the artificial satellite 1 moves in a direction away from the robot hand 6. The above operation allows the electroconductive tether 7 to be extended as illustrated in Fig. 6a. (Besides such a form, the following form may be adopted; for example, a bullet-like mass, rather than the robot hand 6, is fixed to one end of the electroconductive tether 7 on the side of the robot hand 6, and the mass is injected from the artificial satellite 1 by any injection mechanism to extend the electroconductive tether 7. In this case, the robot hand 6 and the robot arm 5 are unnecessary. In the case of the drum type system, the electroconductive tether 7 is unwound from the drum 8 before injection. In the case of the spool type system, the electroconductive tether 7 can be extended only by injecting the mass.) By Jovian gravitation, the electroconductive tether 7 is extended generally along a vertical direction (or a direction of Jovian gravitation). If the artificial satellite 1, even after extended, keeps on moving in the direction away from the robot hand 6, the propulsion device 3 generates an appropriate braking force to suppress such movement.

Under a condition where the other end of the electroconductive tether 7 fixed to the drum 8 and the electron emitter 10 are electrically connected together by the switching circuit 11, one end of the electroconductive tether 7 fixed to the robot hand 6 acts as the electron collector to collect electrons from ambient plasma, and the electron emitter 10 emits electrons to the ambient plasma to form a pseudo closed circuit as described with reference to Fig. 13, so that an induction current flows through the pseudo closed circuit under action of an electromagnetic effect of a magnetic field of Jupiter. (As previously described, in the case of a direction of travel and a direction of the magnetic field as illustrated in Fig. 13, if a speed of the magnetic field of Jupiter due to its rotation (or a speed of movement of a line of magnetic force) is greater than a velocity of the artificial satellite 1, an induction electromotive force is produced in a direction opposite to the direction illustrated in Fig. 13, and a direction of an induction current is also opposite to that in Fig. 13.) The induction current is subjected to action of Lorentz force from the magnetic field of Jupiter, and thus, a braking force (in a case where, in the example in Fig. 13, the y direction component of the apparent velocity of the artificial satellite as seen from Jupiter is positive) or thrust (in a case where, in the example in Fig. 13, the y direction component of the apparent velocity of the artificial satellite as seen from Jupiter is negative) acts on the electroconductive tether 7 and the artificial satellite 1 orbiting and integrated therewith, so that their orbits descend or ascend. (In the case of ascent, in order to reverse the relative positions of the electron collector and the electron emitter, the propulsion device 3 changes an orientation of the artificial satellite 1 to change a direction of extension of the electroconductive tether 7, or the electroconductive tether 7 is initially extended in a direction opposite to the direction illustrated in Fig. 13.)

Even during the orbit descent or ascent under the action of the Lorentz force from the magnetic field of Jupiter, the propulsion device 3 may generate thrust or a braking force to change the orbital motions of the integrated and orbiting artificial satellite 1 and electroconductive tether 7. As an example, the orbit descent can be delayed or the orbit ascent can be advanced by generating thrust in a direction of travel of the orbital motions, or the orbit descent can be advanced or the orbit ascent can be delayed by generating thrust (or a braking force) in the opposite direction. Thrust or a braking force may also be generated in other directions to change the orbits and thereby avoid collisions with other pieces of space debris. Such control of the propulsion device 3 is performed under a control signal transmitted from the ground control center (or a control signal from the internal control system, if the artificial satellite 1 is of the autonomous control type).

Moreover, the power supply system 12 for tether may be used to change a current passing through the electroconductive tether 7 and thereby change the orbital motions of the integrated and orbiting artificial satellite 1 and electroconductive tether 7. Specifically, the power supply system 12 for tether may apply a voltage of such polarity as to allow a current to flow in the +z direction in Fig. 13. (Here, the directions of the magnetic field and the orbital motions are assumed to be the same as those in a case where, in Fig. 13, the end mass is replaced by the artificial satellite 1. However, debris such as an upper stage of a rocket is unnecessary.) Thereby, if the induction current flows in the same direction to exert a braking force, the tether current is increased to thus strengthen the Lorentz force from the magnetic field of Jupiter and hence advance the orbit descent; meanwhile, if the speed of the magnetic field of Jupiter is great and thus the induction current flows in the opposite direction to exert thrust, the tether current is decreased to thus weaken the Lorentz force from the magnetic field of Jupiter and hence delay the orbit ascent. (The power supply system 12 for tether causes a larger current than the induction current to flow in the opposite direction, thereby to stop the orbit ascent and change to the orbit descent. Note that the propulsion device 3 needs to move the artificial satellite 1 or do the like in order to reverse the positions of the electron collector and the electron emitter, as previously mentioned.) A voltage of the opposite polarity may be applied to delay the orbit descent or advance the orbit ascent.

When the switching circuit 11 electrically disconnects the electroconductive tether 7 from the electron emitter 10 and the power supply system 12 for tether, no current flows through the electroconductive tether 7, thus causing no action of thrust or a braking force by the Lorentz force from the magnetic field of Jupiter, so that the orbit change can be stopped. A collision with another piece of space debris, for example, can be avoided by motion control using the propulsion device 3, the power supply system 12 for tether and the switching circuit 11.

### INDUSTRIAL APPLICABILITY

The present invention is applicable for removal of space debris. For sustainable space development, it is essential to establish a technology of space debris removal.

### EXPLANATION OF THE REFERENCE NUMERALS

- 1: artificial satellite
- 2: body part
- 3: propulsion device
- 4: solar cell paddle
- 5: robot arm
- 6: robot hand
- 7: electroconductive tether
- 8: drum
- 9: antenna
- 10: electron emitter
- 11: switching circuit
- 12: power supply system for tether
- 13a: substrate
- 13b: emitter
- 14: gate electrode
- 15: casing
- 16: guide
- 17a-17d: fingers
- 18: power transmission/conversion mechanism
- 18a: gear
- 19: actuator
- 20: proximal portion
- 21: handle
- 22: electrical connector
- 23: recess
- 24: gripping mechanism
- 25: electrical connector
- 26: target portion
- 27: target satellite
- 28: orbit around heavenly body

## Claims

1. An orbit descent system for space debris, the system comprising:
an artificial satellite (1);
an electroconductive tether (7) extendably held by the artificial satellite (1);
wherein an electron collector is formed on one end of the electroconductive tether (7) or a part of the electroconductive tether (7);
an electroconductive tether attachment mechanism (6);
an electroconductive tether extension mechanism (3, 8), and
an electron emitter (10) electrically connected to another end of the electroconductive tether (7) for emitting electrons to ambient plasma in order to form a pseudo closed circuit through the electron emitter, the ambient plasma, the electron collector and the electroconductive tether,
wherein the system is configured so that
the artificial satellite (1) approaches space debris (27) orbiting around a heavenly body, the electroconductive tether attachment mechanism (6) attaches one end of the electroconductive tether (7) to the space debris (27), and further, the electroconductive tether extension mechanism (3, 8) extends the electroconductive tether (7) with the other end thereof held by the artificial satellite (1),
whereby the orbits of the integrated and orbiting artificial satellite (1), electroconductive tether (7) and space debris (27) are caused to descend toward the heavenly body, by action of an electromagnetic effect of a magnetic field around the heavenly body upon the extended electroconductive tether (7), the electromagnetic effect being such that the magnetic field causes an induction current through the pseudo closed circuit formed by the electrons emitted by the electron emitter (10) resulting in a Lorentz force from the magnetic field causing the orbits of the integrated and orbiting artificial satellite (1), electroconductive tether (7) and space debris (27) to descend, and
the orbital motions of the integrated and orbiting artificial satellite (1), electroconductive tether (7) and space debris (27) are changed under control by the artificial satellite (1), wherein the system is configured to change the orbital motions of the integrated and orbiting artificial satellite (1), electroconductive tether (7) and space debris (27), by a propulsion system (3) comprised in the artificial satellite.

2. The system according to claim 1, wherein the system comprises a power supply system (12) adapted for the artificial satellite (1) to apply a voltage to the electroconductive tether (7), and is configured to change the orbital motions of the integrated and orbiting artificial satellite (1), electroconductive tether (7) and space debris (27), by applying the voltage to change a current passing through the electroconductive tether (7).

3. The system according to claim 1 or 2, wherein the system comprises a switching circuit (11) for switching on or off the current passing through the electroconductive tether (7), and the system is configured to switch the current between its on and off states thereby to change the orbital motions of the integrated and orbiting artificial satellite (1), electroconductive tether (7) and space debris (27).

## Patentansprüche

1. System zum Umlaufbahnabstieg für Weltraummüll, wobei das System Folgendes umfasst:
einen künstlichen Satelliten (1);
eine elektrisch leitende Leine (7), die ausziehbar von dem künstlichen Satelliten (1) gehalten wird;
wobei ein Elektronenkollektor an einem Ende der elektrisch leitenden Leine (7) oder an einem Teil der elektrisch leitenden Leine (7) ausgebildet ist;
einen elektrisch leitenden Leinen-Befestigungsmechanismus (6);
einen elektrisch leitenden Leinen-Verlängerungs-Mechanismus (3, 8), und
einen Elektronenemitter (10), der elektrisch mit einem anderen Ende der elektrisch leitenden Leine (7) verbunden ist, um Elektronen an das Umgebungsplasma zu emittieren, um einen pseudo-geschlossenen Stromkreis durch den Elektronenemitter, das Umgebungsplasma, den Elektronenkollektor und die elektrisch leitende Leine zu bilden,
wobei das System derart konfiguriert ist, dass
der künstliche Satellit (1) sich Weltraummüll (27) nähert, der um einen Himmelskörper kreist, der elektrisch leitende Leinen-Befestigungsmechanismus (6) ein Ende der elektrisch leitenden Leine (7) an dem Weltraummüll (27) befestigt, und ferner der elektrisch leitende Leinen-Verlängerungs-Mechanismus (3, 8) die elektrisch leitende Leine (7) verlängert, wobei das andere Ende davon von dem künstlichen Satelliten (1) gehalten wird,
wobei durch die Wirkung eines elektromagnetischen Effekts eines Magnetfelds um den Himmelskörper auf die verlängerte elektrisch leitende Leine (7) verursacht wird, dass die Umlaufbahnen des integrierten und umlaufenden künstlichen Satelliten (1), der elektrisch leitenden Leine (7) und des Weltraummülls (27) in Richtung des Himmelskörpers absteigen, wobei der elektromagnetische Effekt derart ist, dass das Magnetfeld einen Induktionsstrom durch den pseudo-geschlossenen Stromkreis verursacht, der durch die von dem Elektronenemitter (10) emittierten Elektronen gebildet wird, was zu einer Lorentz-Kraft von dem Magnetfeld führt, die bewirkt, dass die Umlaufbahnen des integrierten und umlaufenden künstlichen Satelliten (1), der elektrischen Leine (7) und des Weltraummülls (27) absteigen, und
die Umlaufbewegungen des integrierten und umlaufenden künstlichen Satelliten (1), der elektrisch leitenden Leine (7) und des Weltraummülls (27) unter Steuerung durch den künstlichen Satelliten (1) geändert werden, wobei das System dazu konfiguriert ist, die Umlaufbewegungen des integrierten und umlaufenden künstlichen Satelliten (1), der elektrisch leitenden Leine (7) und des Weltraummülls (27) durch ein in dem künstlichen Satelliten enthaltenes Antriebssystem (3) zu ändern.

2. System nach Anspruch 1, wobei das System ein Stromversorgungssystem (12) umfasst, das für den künstlichen Satelliten (1) eingerichtet ist, um eine Spannung an die elektrisch leitende Leine (7) anzulegen, und das dazu konfiguriert ist, die Umlaufbewegungen des integrierten und umlaufenden künstlichen Satelliten (1), der elektrisch leitenden Leine (7) und des Weltraummülls (27) zu ändern, indem die Spannung angelegt wird, um einen Strom zu ändern, der durch die elektrisch leitende Leine (7) fließt.

3. System nach Anspruch 1 oder 2, wobei das System einen Schaltkreis (11) zum Ein- oder Ausschalten des durch die elektrisch leitende Leine (7) fließenden Stroms umfasst und das System dazu konfiguriert ist, den Strom zwischen seinem Ein- und seinem Aus-Zustand umzuschalten, um dadurch die Umlaufbewegungen des integrierten und umlaufenden künstlichen Satelliten (1), der elektrisch leitenden Leine (7) und des Weltraummülls (27) zu ändern.

## Revendications

1. Système de descente d'orbite de débris spatiaux, le système comprenant :
un satellite artificiel (1) ;
une amarre électriquement conductrice (7) maintenue de façon extensible par le satellite artificiel (1) ;
dans lequel un collecteur d'électrons est formé sur une extrémité de l'amarre électriquement conductrice (7) ou une partie de l'amarre électriquement conductrice (7) ;
un mécanisme d'accrochage d'amarre électriquement conductrice (6) ;
un mécanisme d'extension d'amarre électriquement conductrice (3, 8), et
un émetteur d'électrons (10) connecté électriquement à une autre extrémité de l'amarre électriquement conductrice (7) pour émettre des électrons vers le plasma ambiant afin de former un circuit pseudo-fermé par l'intermédiaire de l'émetteur d'électrons, du plasma ambiant, du collecteur d'électrons et de l'amarre électriquement conductrice,
lequel système est configuré de façon que
le satellite artificiel (1) s'approche d'un débris spatial (27) orbitant autour d'un corps céleste, le mécanisme d'accrochage d'amarre électriquement conductrice (6) fixe une extrémité de l'amarre électriquement conductrice (7) du débris spatial (27) et, en outre, le mécanisme d'extension d'amarre électriquement conductrice (3, 8) étend l'amarre électriquement conductrice (7) avec l'autre extrémité de celle-ci qui est maintenue par le satellite artificiel (1),
moyennant quoi les orbites du satellite artificiel orbitant et intégré (1), de l'amarre électriquement conductrice (7) et du débris spatial (27) sont amenées à descendre en direction du corps céleste, par l'action d'un effet électromagnétique d'un champ magnétique autour du corps céleste suite à l'amarre électriquement conductrice étendue (7), l'effet électromagnétique étant tel que le champ magnétique engendre un courant d'induction à travers le circuit pseudo-fermé formé par les électrons émis par l'émetteur d'électrons (10) ayant pour résultat une force de Lorentz provenant du champ magnétique qui amène les orbites du satellite artificiel orbitant et intégré (1), de l'amarre électriquement conductrice (7) et du débris spatial (27) à descendre, et
les mouvements orbitaux du satellite artificiel orbitant et intégré (1), de l'amarre électriquement conductrice (7) et du débris spatial (27) sont changés sous le contrôle du satellite artificiel (1), lequel système est configuré pour changer les mouvements orbitaux du satellite artificiel orbitant et intégré (1), de l'amarre électriquement conductrice (7) et du débris spatial (27) par un système de propulsion (3) compris dans le satellite artificiel.

2. Système selon la revendication 1, lequel système comprend un système d'alimentation électrique (12) adapté pour que le satellite artificiel (1) applique une tension à l'amarre électriquement conductrice (7), et est configuré pour changer les mouvements orbitaux du satellite artificiel orbitant et intégré (1), de l'amarre électriquement conductrice (7) et du débris spatial (27) par application de la tension pour que le courant traversant l'amarre électriquement conductrice (7) change.

3. Système selon la revendication 1 ou 2, lequel système comprend un circuit de commutation (11) pour laisser passer ou bloquer le courant traversant l'amarre électriquement conductrice (7), et lequel système est configuré pour commuter le courant entre ses états passant et bloqué de manière à changer les mouvements orbitaux du satellite artificiel orbitant et intégré (1), de l'amarre électriquement conductrice (7) et du débris spatial (27).
